# EUROPEAN PATENT APPLICATION

(11) **EP 4 130 785 A1**
(43) Date of publication of application: **08.02.2023**
(21) Application number: 21776304.4
(22) Date of filing: 01.02.2021
(51) Int. Cl.: G01S 7/484, G01S 7/497, G02B 26/10

(54) **SENSOR DEVICE**

(30) Priority: 27.03.2020 JP 2020058896
(71) Applicant: Pioneer Corporation, Tokyo 113-0021 (JP); Pioneer Smart Sensing Innovations Corporation, Tokyo 113-0021 (JP)
(72) Inventor: IZUTA Ryo, Kawagoe-shi, Saitama 350-8555 (JP); KASONO Osamu, Kawagoe-shi, Saitama 350-8555 (JP)
(74) Representative: Vossius & Partner Patentanwälte Rechtsanwälte mbB
(86) International application number: PCT/JP2021/003478
(87) International publication number: WO 2021/192610

(57) **Abstract**

A portion of electromagnetic waves emitted from an emitting unit (110) and reflected by a movable reflection unit (120) is reflected or scattered by a target object such as an object present outside a sensor device (10). Another portion of electromagnetic waves emitted from the emitting unit (110) and reflected by the movable reflection unit (120) is reflected or scattered by a structure (200) positioned closer to the movable reflection unit (120) than the target object. A control unit (150) controls an amplitude of oscillation of the movable reflection unit (120), based on a receiving result from a receiving unit (130) for the electromagnetic waves reflected or scattered by the structure (200). Further, the control unit (150) controls the interval of the emitting timing of the electromagnetic waves from the emitting unit (110), based on the receiving result from the receiving unit (130) for the electromagnetic waves reflected or scattered by the structure (200) .

## Description

### TECHNICAL FIELD

The present invention relates to a sensor device.

### BACKGROUND ART

In recent years, various sensor devices, such as Light Detection And Ranging (LiDAR) have been developed. The sensor device includes a movable reflection unit such as a Micro Electro Mechanical Systems (MEMS) mirror. The sensor device reflects electromagnetic waves such as infrared rays toward a predetermined scanning range by a movable reflection unit to scan a target object such as an object present outside the sensor device.

Patent Document 1 describes that a reflecting member is disposed on one end side of the scanning range of the movable reflection unit in order to obtain the output direction of the laser beam reflected by the movable reflection unit. The laser beam reflected by the reflecting member is received by the light receiving unit. The distance from the movable reflection unit to the reflecting member is calculated based on the light receiving result of the light receiving unit. The direction in which the laser beam reflected by the movable reflection unit is output is calculated, based on the distance from the movable reflection unit to the reflecting member.

Patent Document 2 describes that a reflecting member is provided in a housing accommodating a member configuring a sensor device, such as a movable reflection unit, and a deviation in the scanning position of the movable reflection unit is detected by a laser beam reflected by the reflecting member.

### RELATED DOCUMENTS

### PATENT DOCUMENTS

[Patent Document 1] Japanese Unexamined Patent Publication No. 2016-6403
[Patent Document 2] Japanese Unexamined Patent Publication No. 2020-16481

### SUMMARY OF THE INVENTION

### TECHNICAL PROBLEM

In the sensor device, a point cloud is generated by the irradiation of electromagnetic waves reflected by a movable reflection unit. However, the position of the point cloud may deviate from the position in the design state due to various factors, for example, the deviation of the gain of the transfer function of the movable reflection unit from the gain in the design state.

One example of a problem to be solved by the present invention is to correct the deviation of the position of the point cloud from the position in the design state.

### SOLUTION TO PROBLEM

The invention according to claim 1 is a sensor device including:
a movable reflection unit that reflects electromagnetic waves toward a predetermined scanning range;
a receiving unit that receives the electromagnetic waves reflected or scattered by a structure positioned within the scanning range; and
a control unit that controls an amplitude of oscillation of the movable reflection unit, based on a receiving result from the receiving unit for the electromagnetic waves reflected or scattered by the structure.

### BRIEF DESCRIPTION OF THE DRAWINGS

Fig. 1 is a diagram showing a sensor device according to an embodiment.
Fig. 2 is a diagram showing an example of the relationship between a structure and a scan line of a movable reflection unit.
Fig. 3 is a diagram for explaining a first example of control by a control unit.
Fig. 4 is a diagram for explaining a first example of control by the control unit.
Fig. 5 is a diagram for explaining a second example of control by the control unit.
Fig. 6 is a diagram for explaining a second example of control by the control unit.
Fig. 7 is a diagram showing a first example of a relationship between the structure, and a first spot and a second spot when the movable reflection unit operates in a design state.
Fig. 8 is a graph showing an example of a signal generated in a receiving unit by the first spot and the second spot shown in Fig. 7.
Fig. 9 is a diagram showing an example of a relationship between the structure, and a first spot and a second spot when the movable reflection unit operates in a state where a gain in a first direction of a transfer function of the movable reflection unit deviates from the gain in the design state shown in Fig. 7.
Fig. 10 is a graph showing an example of a signal generated in the receiving unit by the first spot and the second spot shown in Fig. 9.
Fig. 11 is a diagram showing an example of a relationship between the structure, and a first spot and a second spot when the movable reflection unit operates in a state where a phase of a transfer function of the movable reflection unit deviates from the phase in the design state shown in Fig. 7.
Fig. 12 is a graph showing an example of a signal generated in the receiving unit by the first spot and the second spot shown in Fig. 11.
Fig. 13 is a diagram showing a second example of a relationship between the structure, and a first spot and a second spot when the movable reflection unit operates in a design state.
Fig. 14 is a graph showing an example of a signal generated in the receiving unit by the first spot and the second spot shown in Fig. 13.
Fig. 15 is a diagram showing an example of a relationship between the structure, and a first spot and a second spot when the movable reflection unit operates in a state where a gain in a second direction of a transfer function of the movable reflection unit deviates from the gain in the design state shown in Fig. 13.
Fig. 16 is a graph showing an example of a signal generated in the receiving unit by the first spot and the second spot shown in Fig. 15.

### DESCRIPTION OF EMBODIMENTS

Hereinafter, embodiments of the present invention will be described with reference to the drawings. In all drawings, similar components are designated by the same reference numerals, and description thereof will not be repeated as appropriate.

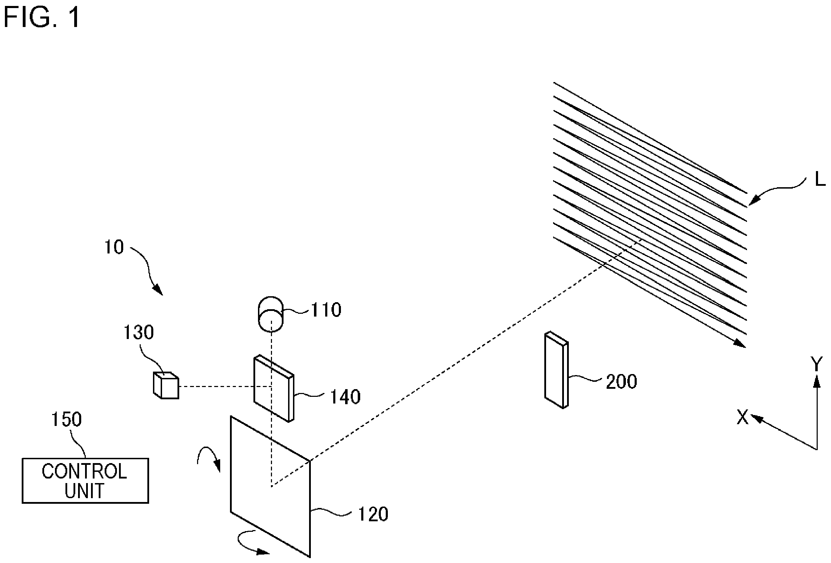

Fig. 1 is a diagram showing a sensor device 10 according to an embodiment.

In Fig. 1, a first direction X and a second direction Y intersect each other and are specifically orthogonal to each other. In Fig. 1, the first direction X is the horizontal direction. The positive direction of the first direction X, which is the direction of the arrow indicating the first direction X, is the left direction when viewed from the movable reflection unit 120 described later toward the scanning range described later of the movable reflection unit 120. The negative direction of the first direction X, which is the direction opposite to the direction of the arrow indicating the first direction X, is the right direction when viewed from the side where the movable reflection unit 120 is positioned toward the scanning range of the movable reflection unit 120. The second direction Y is the vertical direction. The positive direction of the second direction Y, which is the direction of the arrow indicating the second direction Y, is the upward direction. The negative direction of the second direction Y, which is the direction opposite to the direction of the arrow indicating the second direction Y, is the downward direction.

As is clear from the description of the present specification, the first direction X may be a direction different from the horizontal direction, and the second direction Y may be a direction different from the vertical direction.

The sensor device 10 includes an emitting unit 110, a movable reflection unit 120, a receiving unit 130, a beam splitter 140, and a control unit 150. In Fig. 1, the dotted line extending over the emitting unit 110, the movable reflection unit 120, the receiving unit 130, the beam splitter 140, and the scan line L shows electromagnetic waves propagating over the emitting unit 110, the movable reflection unit 120, the receiving unit 130, the beam splitter 140, and the scan line L. In Fig. 1, the electromagnetic waves reflected from the movable reflection unit 120 toward the scan line L are irradiated to the approximately central part of the region where the scan line L is formed.

The emitting unit 110 emits electromagnetic waves such as pulsed infrared rays at regular timing intervals. The emitting unit 110 is an element such as a laser diode (LD) that can convert electricity such as an electric current into an electromagnetic waves such as light. The electromagnetic waves emitted from the emitting unit 110 pass through the beam splitter 140 and are incident on the movable reflection unit 120.

The movable reflection unit 120 reflects the electromagnetic waves emitted from the emitting unit 110 toward a predetermined scanning range. The scanning range of the movable reflection unit 120 is a range that can be irradiated with the electromagnetic waves reflected by the movable reflection unit 120. The movable reflection unit 120 is, for example, a two-axis MEMS mirror. The movable reflection unit 120 is resonantly driven in the first direction X and linearly driven in the second direction Y. For example, a sine wave or a cosine wave is used for the resonance drive of the movable reflection unit 120. For example, a sawtooth wave or a triangular wave is used for the linear drive of the movable reflection unit 120.

A portion of electromagnetic waves emitted from the emitting unit 110 and reflected by the movable reflection unit 120 are reflected or scattered by a target object such as an object present outside the sensor device 10. This electromagnetic waves return to the movable reflection unit 120, pass through the reflection by the movable reflection unit 120 and the reflection by the beam splitter 140 in order, are incident on the receiving unit 130, and are received by the receiving unit 130. The receiving unit 130 is an element such as an avalanche photodiode (APD) capable of converting an electromagnetic waves such as light into electricity such as an electric current.

Another portion of electromagnetic waves emitted from the emitting unit 110 and reflected by the movable reflection unit 120 are reflected or scattered by the structure 200 positioned closer to the movable reflection unit 120 than the target object. This electromagnetic waves return toward the movable reflection unit 120, pass through the reflection by the movable reflection unit 120 and the transmission of the beam splitter 140 in order, are incident on the receiving unit 130, and are received by the receiving unit 130. As the structure 200, for example, a metal or the like that has been subjected to a surface treatment having high stability over time such as plating is used.

The distance from the movable reflection unit 120 to the structure 200 is shorter than the distance from the movable reflection unit 120 to the target object. Therefore, the time from the emitting of the electromagnetic waves from the emitting unit 110 to the receiving of the electromagnetic waves by the receiving unit 130 through the reflection of the electromagnetic waves by the structure 200 is shorter than the time from the emitting of the electromagnetic waves from the emitting unit 110 to the receiving of the electromagnetic waves by the receiving unit 130 through the reflection of the electromagnetic waves by the target object. Therefore, based on the time difference of the signal generated in the receiving unit 130, the sensor device 10 can determine whether the signal generated in the receiving unit 130 is a signal caused by the structure 200 or a signal caused by the target object.

The sensor device 10 may include the structure 200. Alternatively, the structure 200 may be provided outside the sensor device 10. When the sensor device 10 includes the structure 200, the structure 200 can be provided in, for example, in a window portion of a housing that houses members constituting the sensor device 10, such as the emitting unit 110, the movable reflection unit 120, the receiving unit 130, and the beam splitter 140, that is, a portion through which electromagnetic waves pass between the inside and the outside of the housing. However, the place where the structure 200 is provided is not limited to the window portion.

In the present embodiment, the control unit 150 shows blocks of functional units, not a configuration of hardware units. The control unit 150 is implemented by any combination of software and hardware centering on the CPU, a memory, a program loaded in the memory, a storage medium such as a hard disk for storing the program, and an interface for network connection of any computer. There are various modification examples in the implementation method and the device.

The control unit 150 controls the amplitude of the oscillation of the movable reflection unit 120, based on the receiving result from the receiving unit 130 for the electromagnetic waves reflected or scattered by the structure 200. Further, the control unit 150 controls the interval of the emitting timing of the electromagnetic waves from the emitting unit 110, based on the receiving result from the receiving unit 130 for the electromagnetic waves reflected or scattered by the structure 200. Further, the control unit 150 shifts the emitting timing of the electromagnetic waves from the emitting unit 110, based on the receiving result from the receiving unit 130 for the electromagnetic waves reflected or scattered by the structure 200. The control unit 150 performs at least one of these controls for the emitting unit 110 and the movable reflection unit 120, according to the receiving result from the receiving unit 130 for the electromagnetic waves reflected or scattered by the structure 200. Due to the control by the control unit 150, it is possible to correct the deviation of the position of the point cloud generated by the movable reflection unit 120 from the position in the design state.

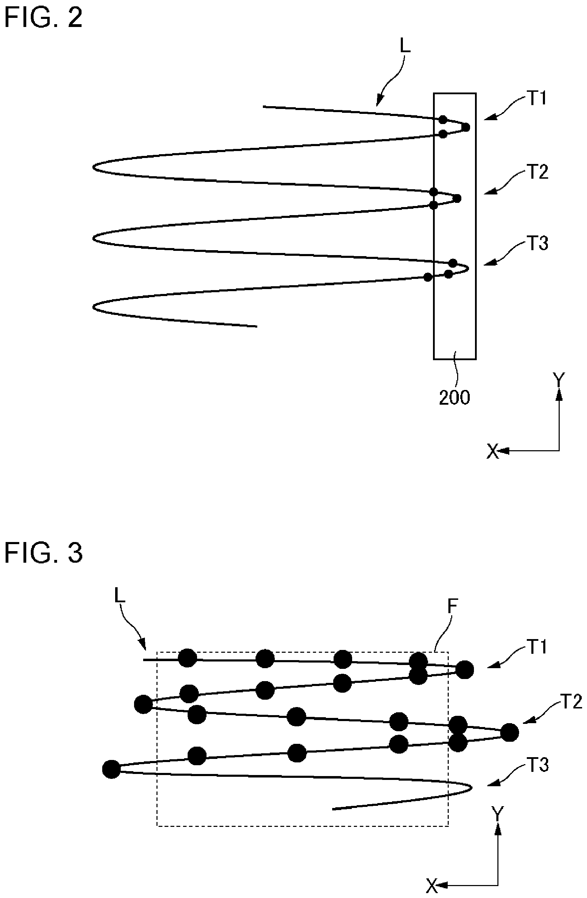

Fig. 2 is a diagram showing an example of the relationship between the structure 200 and the scan line L of the movable reflection unit 120.

The scan line L extends from the positive direction to the negative direction in the second direction Y, that is, the linear drive direction of the movable reflection unit 120 while turning around in the first direction X, that is, the direction of the resonance drive of the movable reflection unit 120. In Fig. 2, a portion of a first period T1 of the scan line L, a second period T2, and a third period T3 are shown.

The first period T1 of the scan line L is a section from the upper end of the scan line L being at a position deviated about 1/4 period from the start point of the first period T1, through the turnaround of first stage from the top on the right side of the scan line L, to the turnaround of the first stage from above on the left side of the scan line L.

The second period T2 of the scan line L is a section from the end point of the first period T1 of the scan line L, through the turnaround of second stage from the top on the right side of the scan line L, to the turnaround of the second stage from above on the left side of the scan line L.

The third period T3 of the scan line L is a section from the end point of the second period T2 of the scan line L, through the turnaround of third stage from the top on the right side of the scan line L, and to the turnaround of the third stage from above on the left side of the scan line L.

The structure 200 intersects at least a portion of a turnaround of the scan line L of the movable reflection unit 120. In the example shown in Fig. 2, the structure 200 intersects with at least a portion of the right-side turnaround of the first period T1 of the scan line L, at least a portion of the right-side turnaround of the second period T2 of the scan line L, and at least a portion of the right-side turnaround of the third period T3 of the scan line L. When the structure 200 is disposed approximately at or around the center in the first direction X of the region where the scan line L is generated, the sensor device 10 may not be able to detect a target object in the region where the structure 200 is disposed, or may have difficulty in detecting the target object. On the other hand, in the present embodiment, the region where the sensor device 10 cannot detect the target object or has difficulty in detecting the target object can be limited to the end part of the scanning range of the movable reflection unit 120.

The region where the structure 200 is disposed is not limited to the example shown in Fig. 2. For example, the structure 200 may be disposed approximately at or around the center in the first direction X of the region where the scan line L is generated. For example, the structure 200 may be a member such as a wire extending linearly along the second direction Y. Even in this case, when the width of the structure 200 in the first direction X is relatively narrow, for example, narrower than the width of the spot generated by the movable reflection unit 120 in the first direction X, electromagnetic waves attenuated by the structure 200 can be suppressed.

In the first period T1 of the scan line L, the movable reflection unit 120 is operating in the design state. Three spots generated by the electromagnetic waves emitted from the emitting unit 110 and reflected by the movable reflection unit 120 are shown as black circles on the right-side turnaround in the first period T1 of the scan line L.

In the second period T2 of the scan line L, the movable reflection unit 120 operates in a state where the gain of the transfer function of the movable reflection unit 120 deviates from the gain in the design state. Three spots generated by the electromagnetic waves emitted from the emitting unit 110 and reflected by the movable reflection unit 120 are shown as black circles on the right-side turnaround in the second period T2 of the scan line L. Due to the gain deviation, the amplitude of the scan line L in the first direction X in the second period T2 is smaller than the amplitude in the design state. Thus, the three spots in the second period T2 of the scan line L are deviated to the left with respect to the three spots in the first period T1 of the scan line L.

In the third period T3 of the scan line L, the movable reflection unit 120 operates in a state where the phase of the transfer function of the movable reflection unit 120 deviates from the phase in the design state. Three spots generated by the electromagnetic waves emitted from the emitting unit 110 and reflected by the movable reflection unit 120 are shown as black circles on and near the right-side turnaround and its vicinity in the third period T3 of the scan line L. Due to the phase deviation, the phases of the three spots in the third period T3 of the scan line L is behind the phase in the design state. Thus, the three spots in the third period T3 of the scan line L deviate from the three spots in the first period T1 of the scan line L.

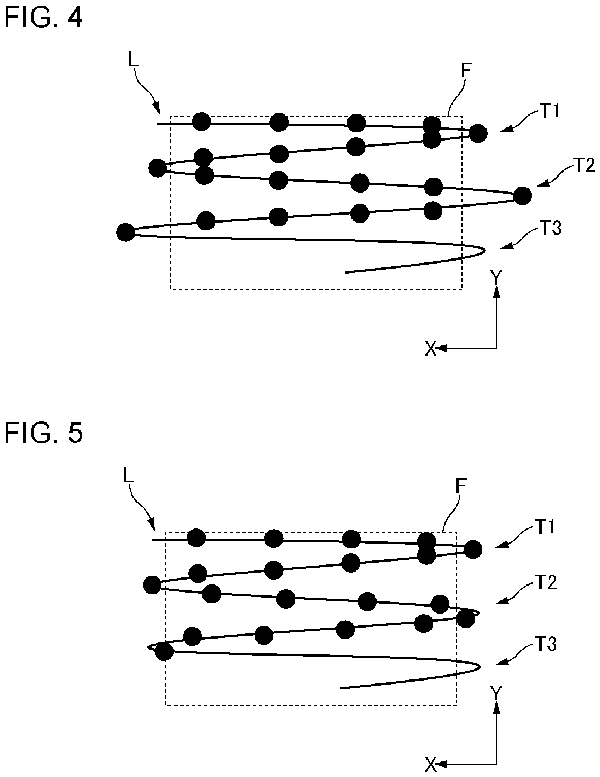

Figs. 3 and 4 are diagrams for explaining a first example of control by the control unit 150.

In Figs. 3 and 4, the field of view F such as the field of view (FOV) of the movable reflection unit 120 is shown by a broken line. The structure 200 shown in Figs. 1 and 2 is disposed, for example, outside the field of view F. Alternatively, the structure 200 may be disposed inside the field of view F.

In Figs. 3 and 4, a point cloud, that is, spots generated by electromagnetic waves emitted by the emitting unit 110 and reflected by the movable reflection unit 120, is shown as a plurality of black circles superimposed on the scan line L.

In Fig. 3, the movable reflection unit 120 in the first period T1 is operating in the design state. In contrast, the gain of the transfer function of the movable reflection unit 120 in the second period T2 deviates from the gain in the design state. Therefore, the amplitude of the scan line L in the first direction X of the second period T2 is larger than the amplitude in the design state. Therefore, in the field of view F, the point cloud of the first period T1 and the point cloud of the second period T2 are disposed so as to be offset from each other in the first direction X. Specifically, in the field of view F, the interval in the first direction X of the point cloud of the second period T2 is wider than the interval in the first direction X of the point cloud of the first period T1.

In Fig. 4, the control unit 150 controls at least one of the amplitude of the movable reflection unit 120 and the interval of the emitting timing of the electromagnetic waves from the emitting unit 110, based on the receiving result from the receiving unit 130 for the electromagnetic waves reflected or scattered by the structure 200. The amplitude of the movable reflection unit 120 can be controlled by, for example, the amplitude of the drive signal input to the movable reflection unit 120. Specifically, the control unit 150 substantially aligns the point cloud of the first period T1 and the point cloud of the second period T2 in the first direction X in the field of view F.

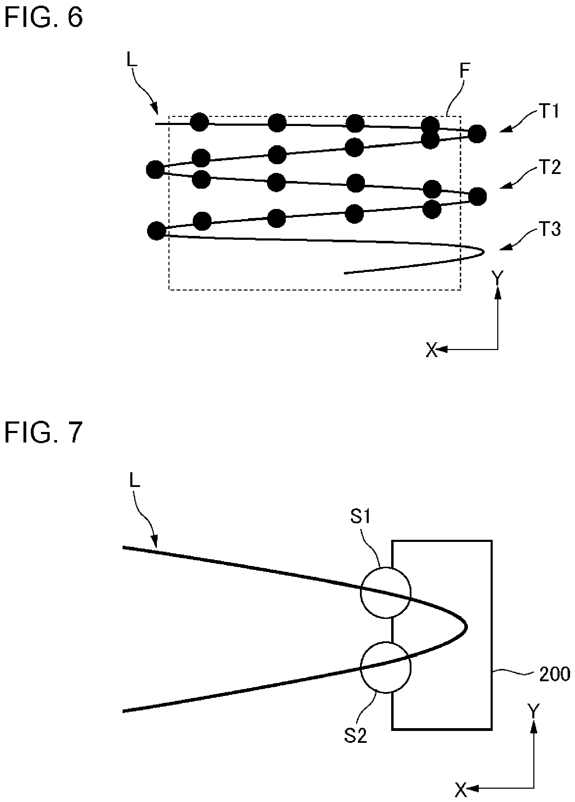

In the examples shown in Figs. 3 and 4, it is described that the point cloud of the first period T1 and the point cloud of the second period T2 are aligned in the first direction X in the field of view F. That is, in the examples shown in Figs. 3 and 4, the state in which the point cloud of each period in the field of view F is aligned in the first direction X as shown in Fig. 4 is a reference state such as a design state of the arrangement of the point cloud in the field of view F. However, the reference state of the arrangement of the point cloud in the field of view F is not limited to the state in which the point cloud of each period in the field of view F is aligned in the first direction X. For example, in the reference state of the arrangement of the point cloud in the field of view F, the point cloud of each period in the field of view F may be deviated by a predetermined distance along the first direction X. Even in this example, even when the arrangement of the point cloud in the field of view F deviates from the arrangement in the reference state, the arrangement of the point cloud in the field of view F can be reverted to the arrangement in the reference state in the same manner as in the example described with reference to Figs. 3 and 4. The same applies to Figs. 5 and 6 described later.

An example of controlling the amplitude of the movable reflection unit 120 by the control unit 150 is as follows.

For example, as shown in Fig. 3, when the interval in the first direction X of the point cloud in the second period T2 is wider than the interval in the first direction X of the point cloud in the first period T1 in the field of view F, the control unit 150 reduces the amplitude of the oscillation of the movable reflection unit 120 in the first direction X in the second period T2 to narrow the interval in the first direction X of the point cloud in the second period T2 in the field of view F, thereby align the position of the point cloud in the first period T1 in the first direction X and the position of the point cloud in the second period T2 in the first direction X in the field of view F. Further, when the interval in the first direction X of the point cloud in the second period T2 is narrower than the interval in the first direction X of the point cloud in the first period T1 in the field of view F, the control unit 150 can widen the interval in the first direction X of the point cloud in the second period T2 in the field of view F, by increasing the amplitude of the oscillation of the movable reflection unit 120 in the first direction X in the second period T2, thereby align the position of the point cloud in the first period T1 in the first direction X and the position of the point cloud in the second period T2 in the first direction X in the field of view F.

An example of controlling the interval of the emitting timing of the electromagnetic waves of the emitting unit 110 by the control unit 150 is as follows.

For example, as shown in Fig. 3, when the interval in the first direction X of the point cloud in the second period T2 is wider than the interval in the first direction X of the point cloud in the first period T1 in the field of view F, the control unit 150 can narrow the interval in the first direction X of the point cloud in the second period T2 in the field of view F, by shortening the interval of the emitting timing of the electromagnetic waves from the emitting unit 110 in the field of view F. Further, when the interval in the first direction X of the point cloud in the second period T2 is narrower than the interval in the first direction X of the point cloud in the first period T1 in the field of view F, the control unit 150 can widen the interval in the first direction X of the point cloud in the second period T2 in the field of view F, by lengthening the interval of the emitting timing of the electromagnetic waves from the emitting unit 110 in the field of view F.

Figs. 5 and 6 are diagrams for explaining a second example of control by the control unit 150. The examples shown in Figs. 5 and 6 are similar to the examples shown in Figs. 3 and 4, except for the following points.

In Fig. 5, the movable reflection unit 120 in the first period T1 is operating in the design state. In contrast, the phase of the transfer function of the movable reflection unit 120 in the second period T2 deviates from the phase in the design state. Therefore, each phase of the point cloud of the second period T2 is ahead of the phase in the design state. Therefore, in the field of view F, the point cloud of the first period T1 and the point cloud of the second period T2 are disposed so as to be offset from each other in the first direction X.

In Fig. 6, the control unit 150 shifts the emitting timing of the electromagnetic waves from the emitting unit 110, based on the receiving result from the receiving unit 130 for the electromagnetic waves reflected or scattered by the structure 200. Specifically, the control unit 150 substantially aligns the point cloud of the first period T1 and the point cloud of the second period T2 in the first direction X in the field of view F.

An example of the shift of the emitting timing of the electromagnetic waves from the emitting unit 110 by the control unit 150 is as follows.

For example, as shown in Fig. 5, when each phase of the point cloud in the second period T2 is ahead of the phase in the design state, the control unit 150 can align the position of the point cloud in the first period T1 in the first direction X and the position of the point cloud in the second period T2 in the first direction X in the field of view F, by accelerating the emitting timing of electromagnetic waves from the emitting unit 110 in the field of view F in the second period T2. Further, when each phase of the point cloud in the second period T2 is behind the phase in the design state, the control unit 150 can align the position of the point cloud in the first period T1 in the first direction X and the position of the point cloud in the second period T2 in the first direction X in the field of view F, by delaying the emitting timing of electromagnetic waves from the emitting unit 110 in the field of view F in the second period T2.

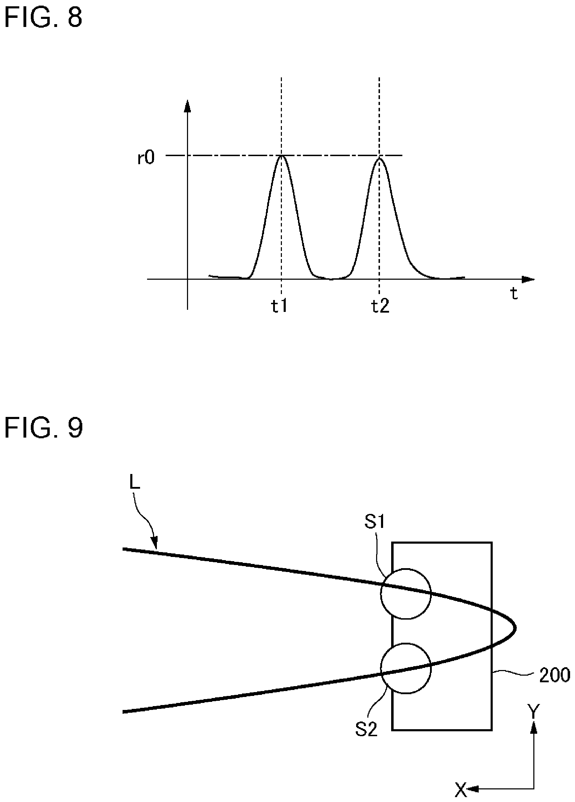

Fig. 7 is a diagram showing a first example of a relationship between the structure 200, and a first spot S1 and a second spot S2 when the movable reflection unit 120 operates in a design state. Fig. 8 is a graph showing an example of a signal generated in the receiving unit 130 by the first spot S1 and the second spot S2 shown in Fig. 7.

Fig. 7 shows a portion of one period of the scan line L generated by the movable reflection unit 120, specifically, the right-side turnaround of the scan line L and its surroundings. The scan line L extends from the upper left toward the right side in Fig. 7, turns around on the right side in Fig. 7, and extends from the right side toward the lower left in Fig. 7.

In Fig. 8, the horizontal axis of the graph indicates the time t, and the vertical axis of the graph indicates the intensity of the signal generated by the receiving unit 130. In Fig. 8, a signal of intensity r0 is generated by the first spot S1 at time t1, and a signal of intensity r0 is generated by the second spot S2 at time t2.

In Figs. 7 and 8, the structure 200 is provided such that the intensity r0 of the signal generated in the receiving unit 130 at time t1 by the first spot S1 when the movable reflection unit 120 operates in the design state and the intensity r0 of the signal generated in the receiving unit 130 at time t2 by the second spot S2 when the movable reflection unit 120 operates in the design state are substantially equal to each other. Specifically, the edge of the structure 200 that intersects the right-side turnaround of the scan line L is parallel to the second direction Y. Further, the reflectance of the structure 200 is uniform in any region in the structure 200. However, the intensity of the signal generated in the receiving unit 130 at time t1 by the first spot S1 when the movable reflection unit 120 operates in the design state and the intensity of the signal generated in the receiving unit 130 at time t2 by the second spot S2 when the movable reflection unit 120 operates in the design state may not be substantially equal to each other or may be different from each other.

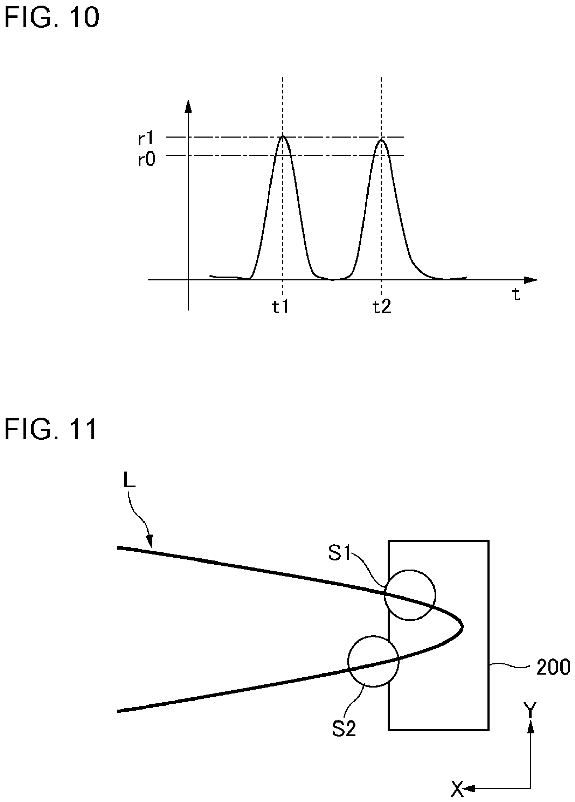

Fig. 9 is a diagram showing an example of a relationship between the structure 200, and the first spot S1 and the second spot S2 when the movable reflection unit 120 operates in a state where a gain in the first direction X of a transfer function of the movable reflection unit 120 deviates from the gain in the design state shown in Fig. 7. Fig. 10 is a graph showing an example of a signal generated in the receiving unit 130 by the first spot S1 and the second spot S2 shown in Fig. 9.

In Fig. 9, the gain in the first direction X of the transfer function of the movable reflection unit 120, that is, the direction of the resonance drive, deviates from the gain in the design state. Thus, the amplitude of the oscillation of the movable reflection unit 120 in the first direction X is larger than the amplitude in the design state.

The irradiation area of the first spot S1 on the structure 200 in Fig. 9 is larger than the irradiation area of the first spot S1 on the structure 200 in Fig. 7. Therefore, the amount of electromagnetic waves received by the receiving unit 130 at time t1 in Fig. 10 is larger than the amount of electromagnetic waves received by the receiving unit 130 at time t1 in Fig. 8. Therefore, the intensity r1 of the signal generated at time t1 in Fig. 10 is higher than the intensity r0 of the signal generated at time t1 in Fig. 8.

The irradiation area of the second spot S2 on the structure 200 in Fig. 9 is larger than the irradiation area of the second spot S2 on the structure 200 in Fig. 7. Therefore, the amount of electromagnetic waves received by the receiving unit 130 at time t2 in Fig. 10 is larger than the amount of electromagnetic waves received by the receiving unit 130 at time t2 in Fig. 8. Therefore, the intensity r1 of the signal generated at time t2 in Fig. 10 is higher than the intensity r0 of the signal generated at time t2 in Fig. 8.

The control unit 150 shown in Fig. 1 can determine the deviation of the gain in the first direction X of the transfer function of the movable reflection unit 120 from the gain in the design state, based on a comparison result between a relationship between a first receiving value of the electromagnetic waves reflected or scattered by a first part of the structure 200 by the receiving unit 130 and a second receiving value of the electromagnetic waves reflected or scattered by a second part of the structure 200 by the receiving unit 130 and a relationship between a first reference receiving value of the electromagnetic waves reflected or scattered by the first part of the structure 200 when the movable reflection unit 120 operates in a reference state, for example, a design state, by the receiving unit 130 and a second reference receiving value of the electromagnetic waves reflected or scattered by the second part of the structure 200 when the movable reflection unit 120 operates in the reference state by the receiving unit 130. Based on this determination result, the control unit 150 can perform various controls, for example, control of the amplitude of the oscillation in the first direction X of the movable reflection unit 120 or control of the interval of the emitting timing of the electromagnetic waves from the emitting unit 110. The first portion of the structure 200 is, for example, the portion of the structure 200 in which the first spot S1 is generated or its vicinity. The second portion of the structure 200 is, for example, the portion of the structure 200 in which the second spot S2 is generated or its vicinity. Further, the first portion and the second portion of the structure 200 are positioned on opposite sides of each other across the turnaround of the scan line L of the movable reflection unit 120, for example.

For example, the control unit 150 can determine the deviation of the gain in the first direction X of the transfer function of the movable reflection unit 120, from the gain in the design state, based on whether both the first receiving value and the second receiving value are larger or smaller than the first reference receiving value or the second reference receiving value. For example, when both the intensity r1 of the signal generated at time t1 and the intensity r1 of the signal generated at time t2 in Fig. 10 is larger than the intensity r0 of the signal generated at time t1 and the intensity r0 of the signal generated at time t2 in Fig. 8, the control unit 150 can determine that the gain in the first direction X of the transfer function of the movable reflection unit 120 is larger than the gain in the design state. Further, when both the intensity r1 of the signal generated at time t1 and the intensity r1 of the signal generated at time t2 in Fig. 10 is smaller than the intensity r0 of the signal generated at time t1 and the intensity r0 of the signal generated at time t2 in Fig. 8, the control unit 150 can determine that the gain in the first direction X of the transfer function of the movable reflection unit 120 is smaller than the gain in the design state.

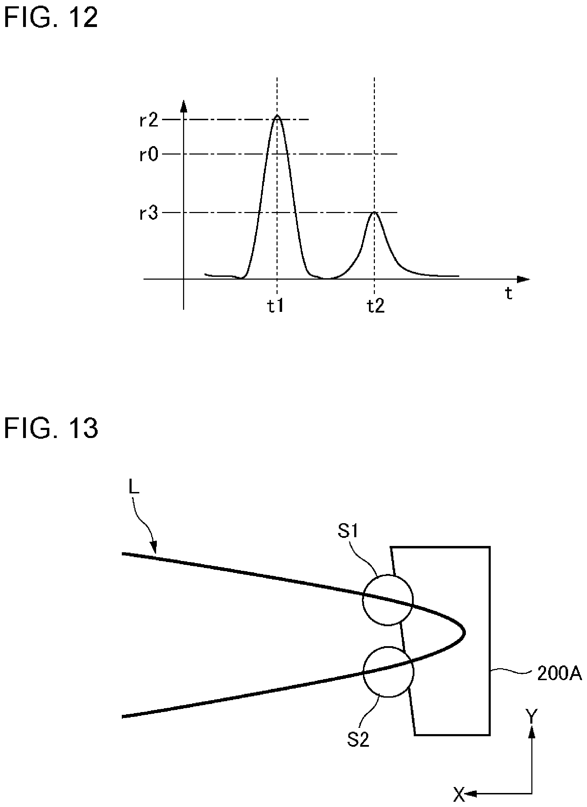

Fig. 11 is a diagram showing an example of a relationship between the structure 200, and the first spot S1 and the second spot S2 when the movable reflection unit 120 operates in a state where a phase of a transfer function of the movable reflection unit 120 deviates from the phase in the design state shown in Fig. 7. Fig. 12 is a graph showing an example of a signal generated in the receiving unit 130 by the first spot S1 and the second spot S2 shown in Fig. 11.

In Fig. 11, the phase of the transfer function of the movable reflection unit 120 is ahead of the phase in the design state.

The irradiation area of the first spot S1 on the structure 200 in Fig. 11 is larger than the irradiation area of the first spot S1 on the structure 200 in Fig. 7. Therefore, the amount of electromagnetic waves received by the receiving unit 130 at time t1 in Fig. 12 is larger than the amount of electromagnetic waves received by the receiving unit 130 at time t1 in Fig. 8. Therefore, the intensity r2 of the signal generated at time t1 in Fig. 12 is higher than the intensity r0 of the signal generated at time t1 in Fig. 8.

The irradiation area of the second spot S2 on the structure 200 in Fig. 11 is smaller than the irradiation area of the second spot S2 on the structure 200 in Fig. 7. Therefore, the amount of electromagnetic waves received by the receiving unit 130 at time t2 in Fig. 12 is smaller than the amount of electromagnetic waves received by the receiving unit 130 at time t2 in Fig. 8. Therefore, the intensity r3 of the signal generated at time t2 in Fig. 12 is lower than the intensity r0 of the signal generated at time t2 in Fig. 8.

The control unit 150 shown in Fig. 1 can determine the deviation of the phase of the transfer function of the movable reflection unit 120 from the phase of the design state, based on a comparison result between a relationship between a first receiving value of the electromagnetic waves reflected or scattered by a first part of the structure 200 by the receiving unit 130 and a second receiving value of the electromagnetic waves reflected or scattered by a second part of the structure 200 by the receiving unit 130 and a relationship between a first reference receiving value of the electromagnetic waves reflected or scattered by the first part of the structure 200 when the movable reflection unit 120 operates in a reference state, for example, a design state, by the receiving unit 130 and a second reference receiving value of the electromagnetic waves reflected or scattered by the second part of the structure 200 when the movable reflection unit 120 operates in the reference state by the receiving unit 130. Based on this determination result, the control unit 150 can perform various controls, for example, shift of the emitting timing of the electromagnetic waves from the emitting unit 110. The first portion of the structure 200 is, for example, the portion of the structure 200 in which the first spot S1 is generated or its vicinity. The second portion of the structure 200 is, for example, the portion of the structure 200 in which the second spot S2 is generated or its vicinity. Further, the first portion and the second portion of the structure 200 are positioned on opposite sides of each other across the turnaround of the scan line L of the movable reflection unit 120, for example.

For example, the control unit 150 can determine the deviation of the phase of the transfer function of the movable reflection unit 120 from the phase of the design state, based on whether one of the first receiving value and the second receiving value is larger than the first reference receiving value or the second reference receiving value, and the other of the first receiving value and the second receiving value is smaller than the first reference receiving value or the second reference receiving value. For example, when the intensity r2 of the signal generated at time t1 in Fig. 12 is larger than the intensity r0 of the signal generated at time t1 in Fig. 8, and the intensity r3 of the signal generated at time t2 in Fig. 12 is smaller than the intensity r0 of the signal generated at time t1 in Fig. 8, the control unit 150 can determine that the phase of the transfer function of the movable reflection unit 120 is ahead of the phase in the design state. Further, when the intensity r2 of the signal generated at time t1 in Fig. 12 is smaller than the intensity r0 of the signal generated at time t1 in Fig. 8, and the intensity r3 of the signal generated at time t2 in Fig. 12 is larger than the intensity r0 of the signal generated at time t1 in Fig. 8, the control unit 150 can determine that the phase of the transfer function of the movable reflection unit 120 is behind the phase in the design state.

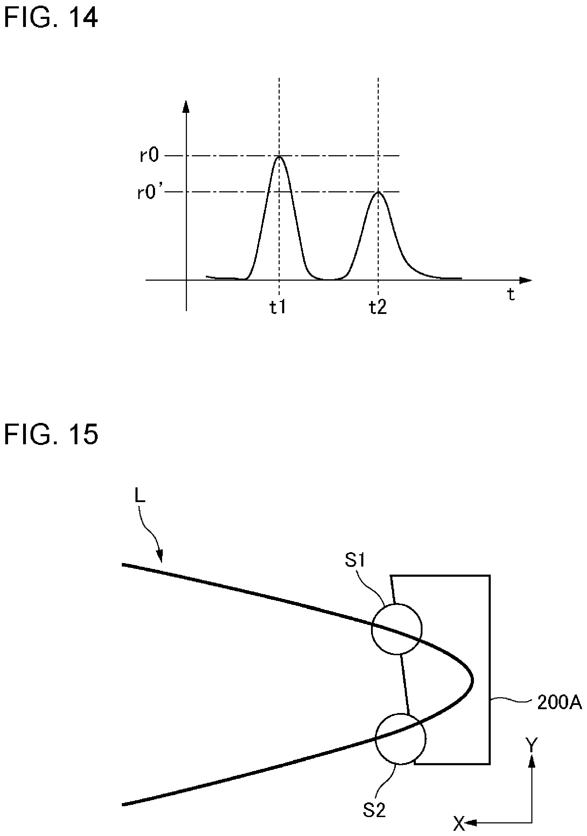

Fig. 13 is a diagram showing a second example of a relationship between the structure 200A, and a first spot S1 and a second spot S2 when the movable reflection unit 120 operates in a design state. Fig. 14 is a graph showing an example of a signal generated in the receiving unit 130 by the first spot S1 and the second spot S2 shown in Fig. 13.

In Figs. 13 and 14, the structure 200A is disposed such that the intensity r0 of the signal generated in the receiving unit 130 at time t1 by the first spot S1 when the movable reflection unit 120 operates in the design state and the intensity r0' of the signal generated in the receiving unit 130 at time t2 by the second spot S2 when the movable reflection unit 120 operates in the design state are different from each other. Specifically, the edge of the structure 200A that intersects the right-side turnaround of the scan line L is oblique to the second direction Y. More specifically, the edge of the structure 200A is inclined obliquely from the left side to the right side of the structure 200A as it goes from the upper side to the lower side of the structure 200A. Further, the reflectance of the structure 200A is uniform in any region in the structure 200A.

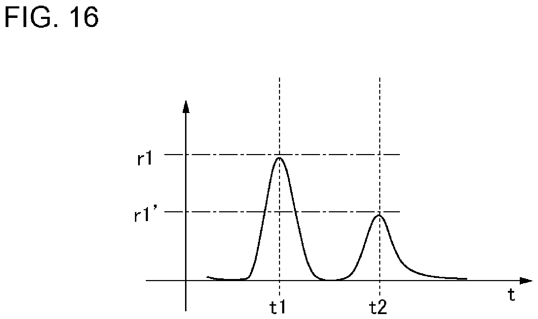

Fig. 15 is a diagram showing an example of a relationship between the structure 200A, and the first spot S1 and the second spot S2 when the movable reflection unit 120 operates in a state where a gain in the second direction Y of a transfer function of the movable reflection unit 120 deviates from the gain in the design state shown in Fig. 13. Fig. 16 is a graph showing an example of a signal generated in the receiving unit 130 by the first spot S1 and the second spot S2 shown in Fig. 15.

In Fig. 15, the gain in the second direction Y of the transfer function of the movable reflection unit 120, that is, the direction of the linear drive, deviates from the gain in the design state. Thus, the interval between the first spot S1 and the second spot S2 in the second direction Y is wider than the interval in the design state.

The ratio of the irradiation area of the second spot S2 on the structure 200A with respect to the irradiation area of the first spot S1 on the structure 200A in Fig. 15 is smaller than the ratio of the irradiation area of the second spot S2 on the structure 200A with respect to the irradiation area of the first spot S1 on the structure 200A in Fig. 13. Therefore, the ratio β of the intensity r1' of the signal generated at time t2 with respect to the intensity r1 of the signal generated at time t1 in Fig. 16 is smaller than the ratio α of the intensity r0' of the signal generated at time t2 with respect to the intensity r0 of the signal generated at time t1 in Fig. 14 (α = r0'/r0, β = r1'/r1).

For example, the control unit 150 can determine the deviation of the gain in the second direction Y of the transfer function of the movable reflection unit 120 from the gain in the design state, based on the comparison result of at least one of the ratio and the difference between the first receiving value and the second receiving value and at least one of the ratio and the difference between the first reference receiving value and the second reference receiving value. For example, when the ratio β is smaller than the ratio α, the control unit 150 can determine that the gain of the transfer function of the movable reflection unit 120 in the second direction Y is larger than the gain in the design state. Further, when the ratio β is larger than the ratio α, the control unit 150 can determine that the gain of the transfer function of the movable reflection unit 120 in the second direction Y is smaller than the gain in the design state. Based on this determination result, the control unit 150 can perform various controls, for example, control of the amplitude of the oscillation of the movable reflection unit 120 in the second direction Y.

The structure 200 shown in Figs. 7 and 9 and the structure 200A shown in Figs. 13 and 15 may be disposed on opposite sides in the first direction X in the region where the scan line L is formed. In this case, the control unit 150 can determine the deviation of the gain of the transfer function of the movable reflection unit 120 in the first direction X from the gain in the design state, by the structure 200 shown in Figs. 7 and 9, and can determine the deviation of the gain of the transfer function of the movable reflection unit 120 in the second direction Y from the gain in the design state, by the structure 200A shown in Figs. 13 and 15.

Although the embodiment has been described above with reference to the drawings, these are examples of the present invention, and various configurations other than the above can be adopted.

For example, in the embodiment, the sensor device 10 is a coaxial LiDAR. However, the sensor device 10 may be a biaxial LiDAR.

According to the present specification, the following aspects are provided.

### (Aspect 1-1)

A sensor device including:
a movable reflection unit that reflects electromagnetic waves toward a predetermined scanning range;
a receiving unit that receives the electromagnetic waves reflected or scattered by a structure positioned within the scanning range; and
a control unit that controls an amplitude of oscillation of the movable reflection unit, based on a receiving result from the receiving unit for the electromagnetic waves reflected or scattered by the structure.

### (Aspect 1-2)

The sensor device according to Aspect 1-1, in which
the movable reflection unit reflects the electromagnetic waves emitted from an emitting unit toward the scanning range, and
the control unit further controls an interval of an emitting timing of the electromagnetic waves from the emitting unit.

### (Aspect 1-3)

The sensor device according to Aspect 1-1 or 1-2, in which
the control unit controls the amplitude of the oscillation of the movable reflection unit, based on a comparison result between a relationship between a first receiving value of the electromagnetic waves reflected or scattered by a first part of the structure by the receiving unit and a second receiving value of the electromagnetic waves reflected or scattered by a second part of the structure by the receiving unit and a relationship between a first reference receiving value of the electromagnetic waves reflected or scattered by the first part of the structure when the movable reflection unit operates in a reference state by the receiving unit and a second reference receiving value of the electromagnetic waves reflected or scattered by the second part of the structure when the movable reflection unit operates in the reference state by the receiving unit.

### (Aspect 1-4)

The sensor device according to Aspect 1-3, in which
the control unit controls the amplitude of the oscillation of the movable reflection unit, based on whether both the first receiving value and the second receiving value are larger or smaller than the first reference receiving value or the second reference receiving value.

### (Aspect 1-5)

The sensor device according to Aspect 1-3, in which
the structure is provided such that the first reference receiving value and the second reference receiving value are different from each other, and
the control unit controls the amplitude of the oscillation of the movable reflection unit, based on a comparison result between at least one of a ratio and a difference between the first receiving value and the second receiving value and at least one of a ratio and a difference between the first reference receiving value and the second reference receiving value.

### (Aspect 1-6)

The sensor device according to any one of Aspects 1-3 to 1-5, in which
the first part and the second part of the structure are positioned on opposite sides of each other across a turnaround of a scan line of the movable reflection unit.

### (Aspect 1-7)

The sensor device according to any one of Aspects 1-1 to 1-6, in which
the structure intersects at least a portion of a turnaround of a scan line of the movable reflection unit.

### (Aspect 2-1)

A sensor device including:
an emitting unit that emits electromagnetic waves;
a movable reflection unit that reflects the electromagnetic waves toward a predetermined scanning range;
a receiving unit that receives the electromagnetic waves reflected or scattered by a structure positioned within the scanning range; and
a control unit that shifts an emitting timing of the electromagnetic waves from the emitting unit, based on a receiving result from the receiving unit for the electromagnetic waves reflected by the structure.

### (Aspect 2-2)

The sensor device according to Aspect 2-1, in which
the control unit shifts the emitting timing of the electromagnetic waves from the emitting unit, based on a comparison result between a relationship between a first receiving value of the electromagnetic waves reflected or scattered by a first part of the structure by the receiving unit and a second receiving value of the electromagnetic waves reflected or scattered by a second part of the structure by the receiving unit and a relationship between a first reference receiving value of the electromagnetic waves reflected or scattered by the first part of the structure when the movable reflection unit operates in a reference state by the receiving unit and a second reference receiving value of the electromagnetic waves reflected or scattered by the second part of the structure when the movable reflection unit operates in the reference state by the receiving unit.

### (Aspect 2-3)

The sensor device according to Aspect 2-2, in which
the control unit shifts the emitting timing of the electromagnetic waves from the emitting unit, based on whether or not one of the first receiving value and the second receiving value is larger than the first reference receiving value or the second reference receiving value, and the other of the first receiving value and the second receiving value is smaller than the first reference receiving value or the second reference receiving value.

### (Aspect 2-4)

The sensor device according to Aspect 2-2 or 2-3, in which
the first part and the second part of the structure are positioned on opposite sides of each other across a turnaround of a scan line of the movable reflection unit.

### (Aspect 2-5)

The sensor device according to any one of Aspects 2-1 to 2-4, in which
the structure intersects at least a portion of a turnaround of a scan line of the movable reflection unit.

This application is based upon and claims the benefit of priority from Japanese Patent Application No. 2020-058896, filed March 27, 2020, the entire contents of which are incorporated herein by reference.

### REFERENCE SIGNS LIST

10 sensor device
   110 emitting unit
120 movable reflection unit
   130 receiving unit
140 beam splitter
150 control unit
200 structure
200A structure
F field of view
L scan line
S1 first spot
S2 second spot
T1 first period
T2 second period
T3 third period
X first direction
Y second direction

## Claims

1. A sensor device comprising:
a movable reflection unit that reflects electromagnetic waves toward a predetermined scanning range;
a receiving unit that receives the electromagnetic waves reflected or scattered by a structure positioned within the scanning range; and
a control unit that controls an amplitude of oscillation of the movable reflection unit, based on a receiving result from the receiving unit for the electromagnetic waves reflected or scattered by the structure.

2. The sensor device according to claim 1, wherein
the movable reflection unit reflects the electromagnetic waves emitted from an emitting unit toward the scanning range, and
the control unit further controls an interval of an emitting timing of the electromagnetic waves from the emitting unit.

3. The sensor device according to claim 1 or 2, wherein
the control unit controls the amplitude of the oscillation of the movable reflection unit, based on a comparison result between a relationship between a first receiving value of the electromagnetic waves reflected or scattered by a first part of the structure by the receiving unit and a second receiving value of the electromagnetic waves reflected or scattered by a second part of the structure by the receiving unit and a relationship between a first reference receiving value of the electromagnetic waves reflected or scattered by the first part of the structure when the movable reflection unit operates in a reference state by the receiving unit and a second reference receiving value of the electromagnetic waves reflected or scattered by the second part of the structure when the movable reflection unit operates in the reference state by the receiving unit.

4. The sensor device according to claim 3, wherein
the control unit controls the amplitude of the oscillation of the movable reflection unit, based on whether both the first receiving value and the second receiving value are larger or smaller than the first reference receiving value or the second reference receiving value.

5. The sensor device according to claim 3, wherein
the structure is provided such that the first reference receiving value and the second reference receiving value are different from each other, and
the control unit controls the amplitude of the oscillation of the movable reflection unit, based on a comparison result between at least one of a ratio and a difference between the first receiving value and the second receiving value and at least one of a ratio and a difference between the first reference receiving value and the second reference receiving value.

6. The sensor device according to any one of claims 3 to 5, wherein
the first part and the second part of the structure are positioned on opposite sides of each other across a turnaround of a scan line of the movable reflection unit.

7. The sensor device according to any one of claims 1 to 6, wherein
the structure intersects at least a portion of a turnaround of a scan line of the movable reflection unit.
